Europäisches Patentamt

European Patent Office

Office européen des brevets

(11) Publication number : **0 474 361 A1**

## (12) EUROPEAN PATENT APPLICATION

(21) Application number : 91307138.7

(22) Date of filing : 02.08.91

(51) Int. Cl.⁵ : **B62H 1/02, B62H 1/12**

(30) Priority : 07.08.90 AU 1606/90

(43) Date of publication of application :
11.03.92 Bulletin 92/11

(84) Designated Contracting States :
AT BE CH DE DK ES FR GB GR IT LI LU NL SE

(71) Applicant : **TOORAK VISION PTY. LTD.**
**209 Lonsdale Street**
**Melbourne, Victoria 3000 (AU)**

(72) Inventor : **Holley, Alistair R.**
**97 Albion Street**
**Brunswick, Victoria 3056 (AU)**

(74) Representative : **Johnson, Terence Leslie**
**Edward Evans & Co. Chancery House 53-64**
**Chancery Lane**
**London WC2A 1SD (GB)**

(54) **A retractable support for a bicycle.**

(57) A retractable support 10 for a bicycle 1 comprises a prop 15 adapted to be coupled to the bicycle 1 to be displaceable from a rest position to an in-use position. The prop comprises an angled arm that terminates at one end in an axially rotatable wheel 23, the other end 25 of the arm being coupled to the bicycle 1. A spring 50 urges the prop 10 to the rest position. An abutment 18 is positioned between the ends of the arm, whereby in use, the prop 15 is engageable by the foot of the cyclist to displace the prop 15 against the spring 50 into the in use position where the wheel 23 engages the ground, and downward foot pressure on the abutment 18 holds the prop 15 in the in use position to stabilise the bicycle. Release of the foot pressure causes the prop 15 to be biased to the rest position.

EP 0 474 361 A1

FIG. 1.

## FIELD OF THE INVENTION

This invention relates to bicycle accessories and in particular, to a retractable support for stabilizing a bicycle.

## PRIOR ART

It is recommended that the seat height of a bicycle be adjusted so that a cyclist will have each of his legs fully extended when each respective pedal is at its lowermost position. However, when the cyclist wishes to remain seated on a stationary bicycle, one foot must be placed on the ground in order to stabilize the bicycle. Unfortunately the adjustment of the seat height means that the bicycle must be tilted to one side which makes it awkward when the cyclist must re-commence pedalling.

Ordinarily, a cyclist will find it most difficult to maintain balance when the bicycle is moving at extremely low speeds and when the bicycle is stationary.

There are known accessories for stabilizing bicycles. Many bicycles are provided with a bicycle stand that comprises a retractable strut. However, these stands are intended primarily for stabilizing a bicycle when it is parked and are not adapted to balance a moving bicycle. Pairs of trainer wheels are often attached to bicycles of beginner cyclists. However, trainer wheels are suitable only for beginner cyclists since a four wheeled cycle has obviously less manoeuvrability than a conventional bicycle. Since these trainer wheels are fixedly attached to bicycles, a cyclist cannot revert conveniently to riding the bicycle on two wheels whenever the added stability of the extra wheels is not required.

In Patent Application PCT/GB90/00296 published 7th September, 1990, there is disclosure of a stabiliser system for bicycles whereby the cyclist by back pedalling causes a spring loaded telescopic arm to move to cause a pair of stabiliser wheels to move into engagement with the ground. The device also has the effect of lifting the rear wheel off the ground. This device is structurally complicated and thus constitutes a bulky and expensive addition to a bicycle.

In German Patent 1,294,249, there is disclosure of a stabilising system which operates by hand operated lever action. A more complicated but similarly operated system is disclosed in Swiss Patents 183,362 and 186,712 and U.S. Patent 1,369,116.

## SUMMARY OF THE INVENTION

According to the present invention there is provided a retractable support for a bicycle comprising a prop adapted to be coupled to the bicycle to be displaceable from a stored position to an in-use position, the prop comprising an angled arm that terminates at one end in an axially rotatable wheel or a ground engaging skid, the other end of the arm being coupled to the bicycle, biasing means urging the prop to the stored position, the angled arm having an abutment positioned between the ends, whereby in use, the prop is engageable by the foot of the cyclist to displace the prop against the biasing means into the in use position where the wheel or skid engages the ground, downward foot pressure on the abutment holding the prop in the in use position to stabilise the bicycle and whereby release of the foot pressure causes the prop to be biased to the stored position.

One embodiment of the present invention will now be described by way of example only with reference to the accompanying drawings in which:

Figure 1 is a side on view of a bicycle showing a retractable support in both the rest and operative positions;
Figure 2 is a front on view of the bicycle shown in Figure 1;
Figure 3 is a detailed side on view of the bicycle shown in Figure 1 showing the sprocket and associated parts in greater detail;
Figure 4 is a view taken along the lines 4-4 of Figure 3;
Figure 5 is a cross-sectional view taken along the lines 5-5 of Figure 3;
Figure 6 is a perspective view of part of an attachment means for effecting attachment of the retractable support to the frame of the bicycle; and
Figures 7 and 8 are perspective views from the rear of a bicycle showing how a cyclist moves the retractable support from a rest position shown in Figure 7 to an operative position shown in Figure 8.

## DESCRIPTION OF THE EMBODIMENTS

The drawings illustrate a conventional bicycle 1 with a retractable support 10 attached to the main frame 2

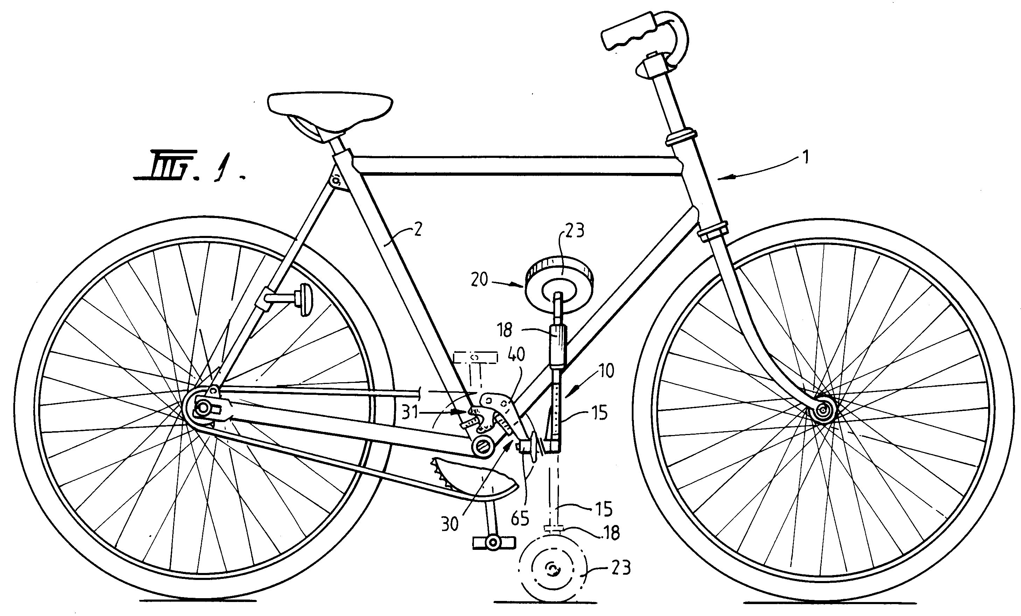

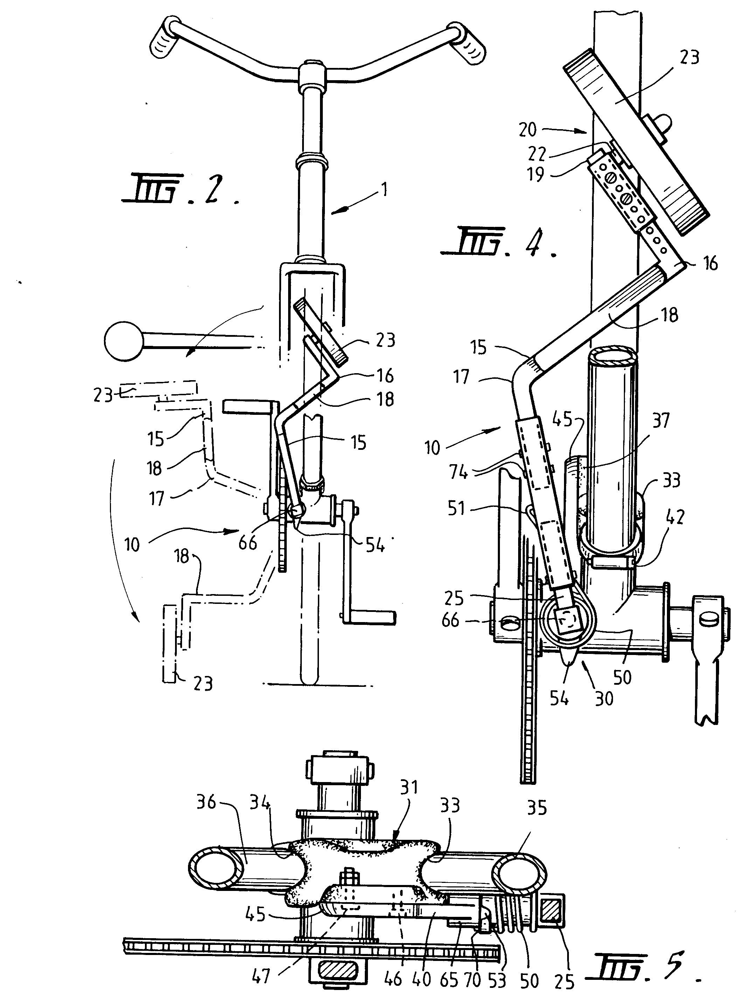

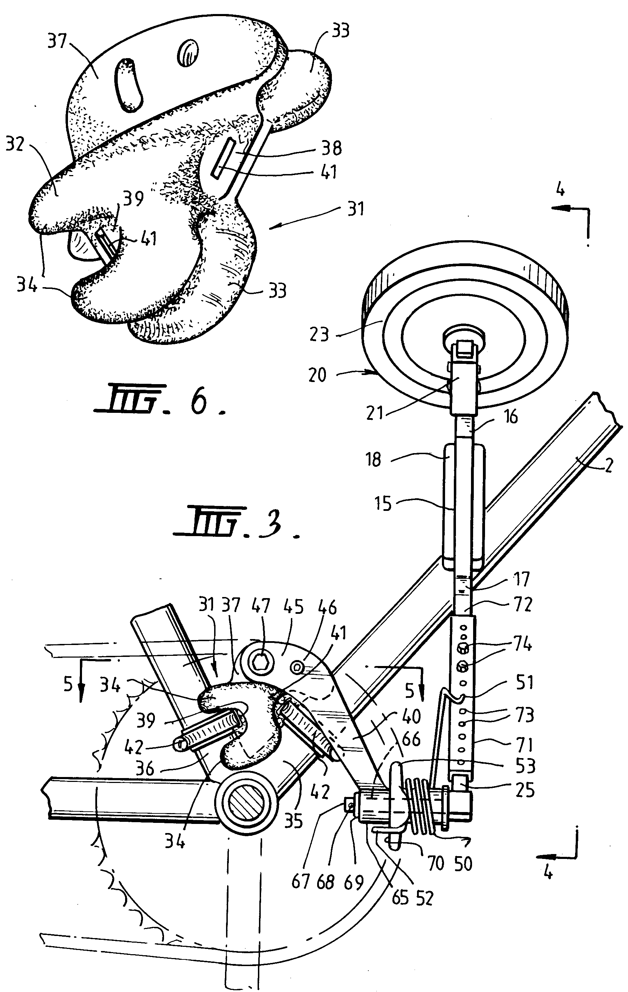

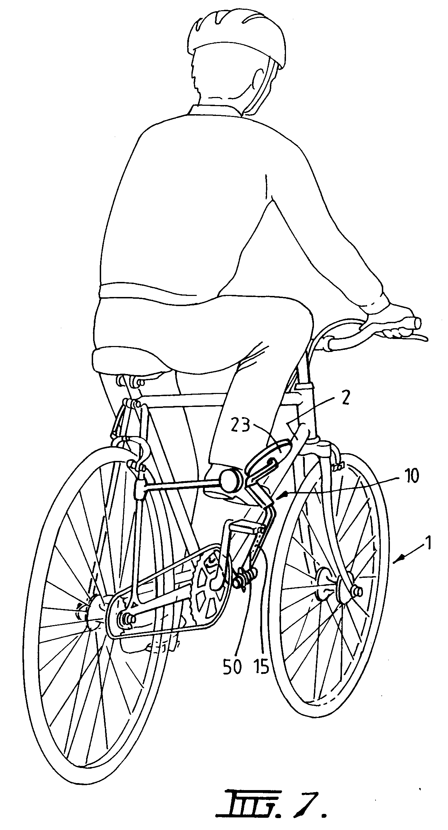

The support 10 comprises an elongated, angled prop 15 which is shaped as a double crank having two elbows 16, 17. The angled shape of the prop 15, which is best illustrated in Figure 4 defines between the elbows 16 and 17 an abutment 18 on which the cyclist may rest his foot when the support is in the operative position shown in dotted profile in Figures 1 and 2. The angled prop 15 terminates at one end 19 in wheel assembly 20 that comprises a sleeve 21 and this bolted to the end 19 of the elbow 16. The sleeve carries a mutually perpendicular axle 22 which supports for free rotation a tyred wheel 23. The attachment of the sleeve 21 to the end 19 of the elbow 16 is adjustable to vary the position of the wheel relative to the elbow 16. The opposite end 25 of the angled prop 15 is rotatably attached to a bracket assembly 30 which is secured to the frame 2 of the bicycle 1.

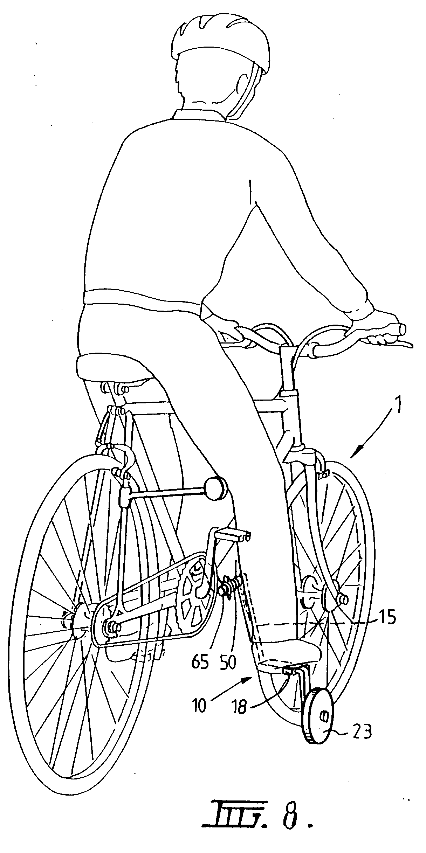

The bracket assembly 30 of the support 10 is attached to the bicycle frame 2 by a collar assembly 31 shown in detail in Figures 3 to 6 comprising a hollow enclosure 32 with two arcuate internal surfaces 33 and 34 that fit closely on adjacent members 35 and 36 of the bicycle frame 2 just above the axis of the pedal sprocket 3. The outer portion of the enclosure has an integrally formed projecting flange 37 onto which is bolted a cranked leg 40. The enclosure 32 has web portions 38 and 39 adjacent the internal surfaces 33 and 34 each having a rectangular slot 41 to accommodate a ring clips 42 which are screwed tight around the frame member as shown in Figure 3. The position of the internal surfaces 33 and 34 ensure that the enclosure 32 can be wedged into position on the apex defined by the frame members 35 and 36 as shown in Figures 3 and 5. The location of the enclosure 32 on the frame members 35 and 36 and the use of ring clips 42 ensure positive and effective mounting of the support 10 on the frame 2 of the bicycle.

The diameter of the internal surfaces 33 and 34 of the collar assembly 31 may be supplied in a variety of sizes to suit different shaft diameters of various bicycle frames.

The cranked leg 40 also comprises a hub 65 having an internal bore 66 that rotatably supports a stub axle 67 that projects laterally from the end 25 of the prop 15. The bore 66 may be lined by a suitable sleeve bearing (not shown). The stub axle 67 is held in position by a split pin 68 and washer 69 that engages an end surface 70 of the hub 65 of the leg 40. The lower end 25 of the prop 15 includes a hollow channel section 71 that fits over a similar section 72 formed on the adjacent leg of the prop 15. The two sections have a series of apertures 73 through which bolts 74 may be positioned to provide a means for adjusting the effective length of the prop.

Figures 7 and 8 illustrate how the cyclist is able to position the support into an in-use position even whilst the bicycle is moving. When the support is to be utilised, the cyclist uses one foot to urge the prop 15 to swing downwardly away from an out-of-use position, which is generally in the plane of the bicycle frame, to the in-use position. Hence it is preferred that the wheeled support is attached to the bicycle such that the prop is within comfortable reach of the cyclist's feet. Moreover, the support should be attached such that the wheel 23 contacts the ground substantially perpendicularly.

When the support 10 is attached to the bicycle in correct alignment, the prop 15 is able to swing in a plane which is substantially perpendicular to the ground. In order to ensure this correct alignment, adjustment means is provided to adjust the horizontal alignment of the stub axle with respect to the ground. The opposite end of the cranked leg 40 to the stub axle comprises an adjustable member 45 which is adjustably attached to the flange 37 of the collar assembly 31 and is fastened in place by a combination of a screw 46 and a bolt 47. When the screw 46 and bolt 47 are loosened slightly, adjustable member 45 is able to pivot in a vertical plane about the bolt 47. Since the collar assembly 31 is adapted to engage with the main support shafts of a bicycle frame whose inclination will vary from one bicycle to the next, the pivotable adjustable member 45 enables the alignment of the stub axle to be adapted to a variety of bicycle frames to be fixed in a generally horizontal disposition. Since the prop 15 swings perpendicularly about the stub axle, the adjustment capability of the stub axle ensures that the prop can be adjusted to swing in a plane substantially perpendicular to the ground, on a variety of bicycle designs.

Figure 4 shows the swinging motion of the prop 15 about the stub axle. Although the prop is able to rotate freely about the stub axle, once the support 10 is attached to the bicycle, as shown in Figures 1 and 2, the arc through which the prop 15 is able to swing will be constrained at one extremity by the bicycle frame 2 and at the other extremity by the road surface. These two extreme positions constitute the out-of-use position and the in-use position respectively.

As shown in Figure 3, retracting means is provided to retract the prop 15 automatically back to the out-of-use position whenever the prop is not held in position by the cyclist's foot. The retracting means comprising a resilient coil spring 50 which is wrapped around the end of the cranked leg 40. Each end of the coil spring is shaped as a hook 51, one of which engages with the prop 15 while the other hook 52 engages with either one of two posts 53,54 which project from the hub 65 of the cranked leg 40. The coil spring 50 is detachable from the prop 15 when the bicycle is not in use so that the resilience of the coil spring material may be preserved.

As shown in Figure 4, the coil spring 50 encircles the leg 40 in an anti-clockwise manner. Hence when the prop 15 is rotated anti-clockwise, the coil spring 50 accordingly resiliently urges the prop clockwise. When the support 10 is attached to the bicycle, the action of the coil spring 50 causes the prop 15 to be retracted back to an out-of-use position automatically in the absence of any external force.

As is evident from Figures 1 to 3, the prop 15 is retracted back towards the plane of the bicycle frame 2 until the prop abuts the frame. Figure 4 shows a side on view of the prop in a generally vertical disposition which would correspond approximately to the out-of-use position of the prop. An advantage of the shape of the prop can be seen in Figure 4 where the double-crank shape of the prop enables the prop to conform more closely to the vertical plane, than would be the case if the prop were not cranked. Hence, when the prop is retracted in its out-of-use position, it generally conforms with and thus does not project from the vertical plane of the bicycle frame so as not to hinder the leg motion of the cyclist.

In order for the wheel 23 to stabilize the bicycle adequately, the wheel 23 must not be positioned too near the plane of the bicycle frame 2 when the prop 15 is in the in-use position. Hence, a further advantage of the cranked shape of the prop, as seen in Figure 8, is that the elbows 16,17 of the prop 15 enable the wheel 23 to be positioned at a greater distance from the plane of the bicycle frame, than would be the case of a prop which is not shaped as a crank.

A cyclist commonly will find it most difficult to maintain balance when pedalling the bicycle at very low speeds and when the bicycle is stationary. These instances naturally will occur when the bicycle is being brought to a standstill, when it is stationary and when it is first set in motion. Figures 7 and 8 illustrate the cyclist slowing the bicycle to a standstill. Figure 7 shows how the cyclist may use his right foot to urge the prop 15 downwards to position it for use. Figure 8 shows the support 10 in use with the wheel 23 of the support touching the ground and acting as a third wheel for balancing the bicycle. The cyclist is thus able to bring the bicycle smoothly to a halt and to remain seated on the stationary bicycle without either foot being required to touch the ground. Figure 8 shows how the cyclist's right foot is able to rest on the abutment 18 of the support 10. The support remains in its in-use position as long as the cyclist's foot rests on the abutment 18. Whilst the bicycle is at rest, it is recommended that the cyclist return the left pedal to near the top of its rotation cycle so that the left foot may initiate pedalling, since the right foot must remain upon the support until the bicycle has been set in motion. The cyclist sets the bicycle in motion by beginning to pedal with his left foot. As the bicycle begins to move, the right foot, which had been resting on the abutment 18 is removed from the support and the support, in the absence of the external force upon the prop, is urged by the coil spring 50 to retract back to the out-of-use position of Figure 7.

The support assists the cyclist by providing a third wheel to balance the bicycle at extremely low speeds and when the bicycle is stationary, in which instances a two-wheeled bicycle would be least stable. The wheeled support also obviates the need for the cyclist's feet to touch the ground at any stage. This means that the cyclist is able to sit upon an upright bicycle at all times even when the bicycle is stationary since the bicycle need never be titled to enable the cyclist's feet to touch the ground.

The drawings show a support which swings on the right side of a bicycle. However, a cyclist may prefer a wheeled support which swings on the left side. If this is preferred, the prop 5 may be disengaged and inverted so that it may swing on the left side of the bicycle.

Although the support described above has been specifically designed as a bolt-on attachment to an existing bicycle it is understood'that the invention in its broadest aspect embraces a strut which pivots about a stub-axle assembly formed integrally on the frame of the bicycle. It is also understood that the ground engaging auxiliary wheel 23 could be replaced by a suitable skid.

The embodiment has been advanced by way of example only and modifications are possible within the spirit and scope of the invention.

## Claims

1. A retractable support 10 for a bicycle 1 comprising a prop 15 adapted to be coupled to the bicycle 1 to be displaceable from a stored position to an in-use position, the prop comprising an angled arm that terminates at one end in an axially rotatable wheel 23 or a ground engaging skid, the other end 25 of the arm being coupled to the bicycle 1, biasing means 50 urging the prop 10 to the stored position, characterised in that the angled arm has an abutment 18 positioned between the ends, whereby in use, the prop 15 is engageable by the foot of the cyclist to displace the prop 15 against the biasing means 50 into the in use position where the wheel 23 or skid engages the ground, and downward foot pressure on the abutment 18 holds the prop 15 in the in use position to stabilise the bicycle and whereby release of the foot pressure causes the prop 15 to be biased to the stored position.

2. The retractable support according to Claim 1, characterised in that the position of the wheel 23 or skid relative to the prop 15 is adjustable.

3. The retractable support according to either Claim 1 or Claim 2, characterised in that the position of the abutment 18 relative to the bicycle 1 is adjustable.

4. The retractable support according to any one of the preceding claims, characterised in that the angled arm is shaped as a crank so that when in the in use position, the plane of the abutment 18 is substantially parallel to a plane containing the axis of rotation of the wheel 23.

5. The retractable support according to any one of the preceding claims, characterised in that the prop 15 when in the stored position extends substantially vertical in a plane parallel to the plane of the bicycle 1 so that the wheel 23 or skid does not project substantially either side of the plane of the frame 2 of the bicycle 1.

6. The retractable support according to any one of the preceding claims, characterised in that one end 25 of the prop 15 is rotatable about attachment means 30 adapted to be clamped to the frame 2 of the bicycle 1, a coil spring 50 being positioned between that end 25 of the prop 15 and the attachment means 30 to act as biasing means urging the prop into the stored position.

7. The retractable support according to Claim 6, characterised in that the attachment means 30 has an internal recess 66 into which the part 67 of end 25 of the prop 15 is axially rotatable, the attachment means 30 also having curved engagement means 33 and 34 arranged to closely engages the curved surfaces of adjacent components 35,36 of the frame 2 of the bicycle 1 and clamping means 42 to secure the engagement means 30 against the frame components 35,36.

8. The retractable support according to Claim 7 characterised in that the attachment means 30 is adapted to be wedged into the apex defined between the base of the bicycle frame 2.

9. The retractable support according to any one of Claims 1 to 5 wherein the prop is attached to a support that is an integral part of the frame of the bicycle.

FIG. 1.

FIG. 2.

FIG. 4.

FIG. 5.

FIG. 6.

FIG. 3.

Fig. 7.

$\overline{III.}$ 8 .

European Patent
Office

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | EP-A-0 104 127 (P. PERE) * Figures 1-9 * | 1,2,4,6 ,9 | B 62 H 1/02 B 62 H 1/12 |
| A | | 5,7 | |
| | --- | | |
| X | GB-A- 765 143 (AKTIEBOLAGET E. FLERON) * Complete document * | 1,5-7,9 | |
| A | | 4 | |
| | --- | | |
| A | US-A-2 022 604 (C.W. RASMUSS) * Complete document * ----- | 1,3-6,9 | |

TECHNICAL FIELDS
SEARCHED (Int. Cl.5)

B 62 H

The present search report has been drawn up for all claims

| Place of search | Date of completion of the search | Examiner |
|---|---|---|
| THE HAGUE | 12-11-1991 | FRANKS B.G. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)